# EUROPÄISCHE PATENTSCHRIFT

(11) **EP 3 119 646 B1**
(45) Veröffentlichungstag und Bekanntmachung des Hinweises auf die Patenterteilung: **25.07.2018**
(21) Anmeldenummer: 15704768.9
(22) Anmeldetag: 09.02.2015
(51) Int. Cl.: B60R 25/20

(54) **VERFAHREN UND VORRICHTUNG ZUM BETÄTIGEN EINES SCHLIESSELEMENTS FÜR EIN FAHRZEUG**
METHOD AND DEVICE FOR ACTUATING A CLOSING ELEMENT FOR A VEHICLE
PROCÉDÉ ET DISPOSITIF POUR ACTIONNER UN ÉLÉMENT DE FERMETURE POUR UN VÉHICULE

(30) Priorität: 17.03.2014 DE 102014204911
(43) Veröffentlichungstag der Anmeldung: 25.01.2017
(73) Patentinhaber: Volkswagen Aktiengesellschaft, 38440 Wolfsburg (DE)
(72) Erfinder: ETTE, Bernd, 38442 Wolfsburg (DE)
(86) Internationale Anmeldenummer: PCT/EP2015/052598
(87) Internationale Veröffentlichungsnummer: WO 2015/139882

(56) Entgegenhaltungen:
- EP-A1- 2 696 019
- WO-A1-2013/037806
- JP-A- 2005 133 529

## Beschreibung

Die vorliegende Erfindung betrifft ein Verfahren und eine Vorrichtung, um ein Schließelement (insbesondere eine Heckklappe) eines Fahrzeugs berührungslos zu betätigen.

Die DE 10 2012 113 146 A1 offenbart das Betätigen einer Heckklappe eines Fahrzeugs. Dabei werden Trittpositionen zum Betätigen der Heckklappe auf dem Boden angezeigt und mit einer Ultraschallwellen-Sensoreinheit eine Tritteingabe anhand einer Änderung des Abstands erfasst. Wenn ein Eintrittzustand eine vorbestimmte Zeit beibehalten wird, wird die Heckklappe geöffnet bzw. geschlossen.

Die DE 10 2008 025 669 A1 offenbart eine Fahrzeugschließeinrichtungsbetätigungsvorrichtung. Dabei werden das Vorhandensein, die Abwesenheit und/oder die Richtungsbewegung eines Objekts detektiert. Zur Betätigung kann eine Geste, bei welcher ein Fuß in Form eines Musters von Richtungen bewegt wird, erforderlich sein. Ein Logo wird auf den Boden projiziert, um über eine erfolgreiche Detektion zu informieren.

Die WO 2013/037465 A1 beschreibt eine optische Messvorrichtung für ein Fahrzeug. Dabei werden zwei Lichtfelder auf eine Oberfläche projiziert. Die Änderung der Reflektionen nur eines Lichtfeldes löst einen Schaltvorgang aus, wenn die Reflektionen des zweiten Lichtfeldes nicht beeinflusst werden. Das Dokument WO2013/037806 offenbart ein Verfahren zum Betätigen eines Schließelements eines Fahrzeugs das, folgende Schritte umfasst: optisches Erfassen einer eines Objekts in einem Bereich, Erzeugen einer optischen Markierung zur Lokalisierung, Erfassen eines Bewegungsablaufs des Objekts, wobei der Bewegungsablauf eine gerichtete Bewegung umfasst, und Betätigen des Schließelements, wenn der erfasste Bewegungsablauf mindestens einer vorgegebenen Bedingung genügt. Dieses Dokument offenbart weiter eine Vorrichtung zum Betätigen eines Schließelements eines Fahrzeugs, wobei die Vorrichtung eine Steuerung, optische Sensormittel und eine Lichtquelle umfasst, wobei die optischen Sensormittel ausgestaltet sind, um eine gerichtete Bewegung eines Objekts in einem Bereich zu erfassen, wobei die Lichtquelle und die Steuerung ausgestaltet sind, um eine optische Markierung zur Lokalisierung des Bereichs zu erzeugen, wobei die optischen Sensormittel ausgestaltet sind, um einen Bewegungsablauf des Objekts zu erfassen, wobei der Bewegungsablauf die gerichtete Bewegung umfasst, wobei die Vorrichtung ausgestaltet ist, um das Schließelement zu betätigen, wenn die Steuerung entschieden hat, dass der erfasste Bewegungsablauf mindestens einer vorgegebenen Bedingung genügt.

Nach dem Stand der Technik kann beispielsweise eine Heckklappe eines Fahrzeugs durch eine so genannte Kickgeste geöffnet oder geschlossen werden. Da zumindest bestimmte Personen (beispielsweise Kinder oder Senioren) Schwierigkeiten haben, dem Fahrzeug eine solche Kickgeste anzulernen oder später diese Kickgeste korrekt auszuführen, stellt sich die vorliegende Erfindung die Aufgabe, das berührungslose Betätigen eines Schließelements eines Fahrzeugs anwenderfreundlicher auszuführen.

Erfindungsgemäß wird diese Aufgabe durch ein Verfahren zum Betätigen eines Schließelements eines Fahrzeugs nach Anspruch 1 und durch eine Vorrichtung zum Betätigen eines Schließelements eines Fahrzeugs nach Anspruch 11 gelöst. Die abhängigen Ansprüche definieren bevorzugte und vorteilhafte Ausführungsformen der vorliegenden Erfindung.

Im Rahmen der vorliegenden Erfindung wird ein Verfahren zum Betätigen eines Schließelements eines Fahrzeugs bereitgestellt. Dabei umfasst das erfindungsgemäße Verfahren folgende Schritte:
- Mit optischen Sensormitteln wird eine gerichtete Bewegung eines Objekts zu einer beliebigen Stelle innerhalb eines Bereichs im Umfeld des Fahrzeugs erfasst.
- Nur wenn diese gerichtete Bewegung erfasst wird, wird eine optische Markierung insbesondere auf dem Boden erzeugt, um dadurch die Stelle zu lokalisieren oder zu kennzeichnen.
- Erfassen eines Bewegungsablaufs des Objekts. Dabei umfasst dieser Bewegungsablauf die gerichtete Bewegung.
- Nur wenn der erfasste Bewegungsablauf einer oder mehreren Bedingungen genügt, wird das Schließelement betätigt.

Durch den Einsatz der optischen Sensormittel zum Erfassen der gerichteten Bewegung kann der Bereich (insbesondere der Erfassungsbereich der optischen Sensormittel), in welchem die Stelle angeordnet ist, zu welcher die gerichtete Bewegung ausgeführt wird, vorteilhafterweise wesentlich größere Ausmaße annehmen, als dies beim Erfassen der gerichteten Bewegung mittels eines kapazitiven Sensors oder mittels eines Ultraschall-Sensors der Fall wäre. Dadurch können die Bedingungen, welchen der erfasste Bewegungsablauf genügen muss, wesentlich anwenderfreundlicher ausgelegt werden, als dies nach dem Stand der Technik der Fall ist, was einen intuitiveren Bewegungsablauf zur Betätigung des Schließelements ermöglich.

Erfindungsgemäß wird die gerichtete Bewegung des Objekts analysiert und in der Richtung dieser Bewegung die Stelle ermittelt, welche dann mit der optischen Markierung gekennzeichnet wird. Die optische Markierung dient dabei nicht nur zur Lokalisierung der Stelle, sondern auch als Hinweis, dass ein erster Teil des Bewegungsablaufs korrekt erfasst wurde. Die Erzeugung der optischen Markierung ist demnach auch eine Art Rückmeldung dafür, dass das erfindungsgemäße Verfahren zum Erfassen eines Bewegungsablaufs oder einer Geste bereit ist. Die optische Markierung kann dabei mit einem Laser erzeugt werden und eine beliebige Form (z.B. ein den jeweiligen Fahrzeugtyp bezeichnendes Symbol) aufweisen.

Bei dem Schließelement kann es sich dabei um eine Klappe, eine Tür, ein Fenster oder ein Schiebedach des Fahrzeugs handeln.

Insbesondere wird die optische Markierung nur dann erzeugt, wenn nach dem Erfassen der gerichteten Bewegung ein dem Fahrzeug zugeordneter ID-Geber oder Funkschlüssel erfasst wird. Dabei wird der Schlüssel bevorzugt im Bereich der optischen Sensormittel gesucht.

Das Erfassen bzw. Suchen des Funkschlüssels erst nach dem korrekten Erfassen der gerichteten Bewegung und vor der Erzeugung der optischen Markierung hat folgende Vorteile:
- Ein ständiges Suchen nach dem für das Fahrzeug berechtigten Funkschlüssel, wie es nach dem Stand der Technik häufig der Fall ist, ist vorteilhafterweise nicht notwendig, wodurch Energie gespart wird.
- Indem die optische Markierung nur dann erzeugt wird, wenn vorher der Funkschlüssel gefunden wurde, wird die optische Markierung vorteilhafterweise nur in den Fällen erzeugt, in welchen ein berechtigter Insasse des Fahrzeugs zumindest einen Teil des zur Betätigung des Schließelements erforderlichen Bewegungsablauf bereits ausgeführt hat. Durch andere Personen (beispielsweise Fußgänger), welche keinen Funkschlüssel besitzen und sich zufällig in der richtigen Weise zu einer Stelle in dem Bereich bewegen, kann die optische Markierung vorteilhafterweise nicht erzeugt werden.

Gemäß einer bevorzugten erfindungsgemäßen Ausführungsform wird mittels der optischen Sensormittel überprüft, ob das Objekt die Stelle erreicht. Wenn dies der Fall ist, wird vorteilhafterweise eine Eigenschaft der optischen Markierung verändert, um dem Benutzer zu signalisieren, dass die Hinbewegung korrekt erfasst wurde.

Beispielsweise kann die optische Markierung zuerst mit einer vorbestimmten Frequenz blinken, um dann dauerhaft zu leuchten, wenn das Objekt die Stelle erreicht hat.

Insbesondere weist der Bereich mindestens einen vorbestimmten Abstand (beispielsweise mindestens 0,4 m) von dem Fahrzeug auf.

Im Gegensatz zum Stand der Technik, bei welchem meist kapazitive Sensoren zur Erfassung des Bewegungsablaufs bzw. Kickgeste eingesetzt werden, kann der Bereich, in welchem der Bewegungsablauf durchzuführen ist, vorteilhafterweise einen größeren Abstand vom Fahrzeug besitzen. Dadurch ist es vorteilhafterweise möglich, den Bewegungsablauf in einem Abstand vom Fahrzeug auszuführen, welcher groß genug ist, um sich beispielsweise außerhalb des Schwenkbereichs einer Heckklappe des Fahrzeugs zu befinden. Mit anderen Worten kann der Bereich zur Betätigung eines bestimmten Schließelements des Fahrzeugs so gewählt werden, dass die Bedienperson durch die Betätigung des Schließelements nicht durch das Schließelement berührt wird, auch wenn sie nach der Durchführung des Bewegungsablaufs nicht vom Fahrzeug zurücktritt.

Insbesondere handelt es sich bei dem Objekt um einen menschlichen Fuß oder einen Schuh. Mit anderen Worten werden die gerichtete Bewegung und der Bewegungsablauf nur für ein Objekt korrekt erfasst, wenn dieses Objekt die Form eines menschlichen Fußes oder Schuhs aufweist. Dabei wird ein Objekt dann als Fuß bzw. Schuh erkannt, wenn eine Fußspitze bzw. Schuhspitze und ein Übergang des Fußes in ein Schienenbein als solche erfasst werden. Zusätzlich wird die Größe und Höhe des Fußes erfasst. Nur wenn die Größe und Höhe des Fußes in einem vorbestimmten Bereich liegen, gilt das Objekt als ein Fuß. Unter der Höhe wird dabei insbesondere der Abstand des Fußes vom Boden verstanden, welcher beispielsweise nicht größer als 0,3 m sein sollte. Anders ausgedrückt kann das Schließelement nur dann betätigt werden, wenn als das Objekt ein Fuß bzw. Schuh erfasst wurde.

Durch die Beschränkung auf den Fuß bzw. Schuh ist das erfindungsgemäße Verfahren vorteilhafterweise robuster gegenüber Fehlauslösungen, welche beispielsweise auftreten, wenn ein Koffer oder eine Tasche in dem Bereich abgestellt werden oder wenn eine Katze, ein Hund oder ein Ball am Fahrzeug vorbeilaufen.

Die mindestens eine Bedingung, welche von dem Bewegungsablauf erfüllt werden muss, damit das Schließelement betätigt wird, umfasst insbesondere eine oder mehrere der folgenden Bedingungen:
- Der Bewegungsablauf umfasst eine Rückbewegung des Objekts. Dabei muss die Richtung dieser Rückbewegung der Richtung der gerichteten Bewegung, welche als eine Hinbewegung angesehen wird, entgegengerichtet sein. Anders ausgedrückt wird die Hinbewegung des Fußes zu der Stelle mit der Rückbewegung bzw. dem Wegziehen des Fußes von der Stelle verglichen. Nur wenn diese beiden Bewegungen sich entsprechen, d.h. im Wesentlichen zueinander entgegengesetzte Richtungen aufweisen, wird das Schließelement betätigt.
- Der Bewegungsablauf umfasst ein Verweilen des Objektes während eines vorbestimmten Zeitintervalls an der Stelle. Mit anderen Worten genügt der Bewegungsablauf nur dann der mindestens einen Bedingung, wenn das Objekt für ein vorbestimmtes Zeitintervalls (beispielsweise mindestens 0,4 s und höchstens 3 s) an der Stelle verharrt. Wenn also das Objekt weniger als eine erste Zeitspanne (z.B. 0,4 s) oder mehr als eine zweite Zeitspanne (z.B. 3 s) an der Stelle verharrt, wird das Schließelement nicht betätigt.

Die gerichtete Bewegung ist dabei insbesondere auf die optischen Sensormittel zu gerichtet. Mit anderen Worten wird die gerichtete Bewegung nur dann als eine solche erkannt, wenn die Richtung, in welcher die gerichtete Bewegung ausgeführt wird, auf die optischen Sensormittel gerichtet ist. Wenn die Richtung dagegen nicht auf die optischen Sensormittel gerichtet ist, wird das Schließelement nicht betätigt.

Durch diese Beschränkung der gerichteten Bewegung führen vorteilhafterweise an dem Fahrzeug vorbeilaufende Fußgänger oder vorbeifahrende Fahrzeuge die derart definierte gerichtete Bewegung nicht aus, so dass vorbeilaufende Fußgänger oder vorbeifahrende Fahrzeuge beispielsweise noch nicht einmal ein Suchen nach dem Fahrzeugschlüssel initiieren.

Bezüglich der Erzeugung der optischen Markierung zur Lokalisierung der Stelle existieren mehrere Varianten. Zum einen kann die optische Markierung genau an der Stelle erzeugt werden. Zum anderen kann die optische Markierung beabstandet von der Stelle (im Extremfall auch außerhalb des Bereichs) erzeugt werden und eine Richtungsangabe umfassen, durch welche die Stelle ausgehend von der optischen Markierung lokalisiert werden kann.

Wenn nach dem (ersten) Erzeugen der optischen Markierung erfasst wird, dass der erfasste Bewegungsablauf der mindestens einen Bedingung nicht genügt, eine Eigenschaft der optischen Markierung geändert wird, um einen Benutzer darüber zu informieren, dass das Schließelement nicht betätigt wird.

Sobald die optische Markierung zum ersten Mal erzeugt wird, signalisiert dies dem Benutzer, dass ein erster Teil des Bewegungsablaufs korrekt erfasst wurde und dass z.B. auch der Fahrzeugschlüssel erfolgreich erfasst wurde. Sollte der restliche Teil des Bewegungsablaufs nicht den vorgegebenen Bedingungen entsprechen, ist es vorteilhaft, den Benutzer möglichst umgehend darüber zu informieren, was z.B. in Form einer rasch blinkenden optischen Markierung geschehen kann.

Im Rahmen der vorliegenden Erfindung wird auch eine Vorrichtung zum Betätigen eines Schließelements eines Fahrzeugs bereitgestellt. Dabei umfasst die Vorrichtung eine Steuerung, optische Sensormittel und eine Lichtquelle. Die optischen Sensormittel sind ausgestaltet, um eine gerichtete Bewegung eines Objekts (insbesondere eines Fußes oder Schuhs) zu einer beliebigen Stelle in einem Bereich (z.B. Erfassungsbereich der Sensormittel) zu erfassen. Die Lichtquelle ist im Zusammenspiel mit der Steuerung ausgestaltet, um eine optische Markierung zur Lokalisierung der Stelle zu erzeugen, wenn die Steuerung vorher die gerichtete Bewegung mit Hilfe der optischen Sensormittel erfasst hat. Die optischen Sensormittel sind darüber hinaus ausgestaltet, um einen Bewegungsablauf des Objekts zu erfassen, wobei dieser Bewegungsablauf quasi als ersten Teil die gerichtete Bewegung umfasst. Die Vorrichtung ist ausgestaltet, um das Schließelement zu betätigen, wenn die Steuerung erfasst hat, dass der erfasste Bewegungsablauf einer oder mehrerer vorgegebener Bedingungen genügt.

Die Vorteile der erfindungsgemäßen Vorrichtung entsprechen im Wesentlichen den Vorteilen des erfindungsgemäßen Verfahrens, welche vorab im Detail ausgeführt sind, so dass hier auf eine Wiederholung verzichtet wird.

Bevorzugte Einbauorte der optischen Sensormittel sind die Kennzeichenbeleuchtung in einer Heckklappe, eine hintere äußere Ecke oder die B-Säule des Fahrzeugs.

Gemäß einer bevorzugten erfindungsgemäßen Ausführungsform sind die optischen Sensormittel ausgestaltet, um zu erkennen, in welchem von verschiedenen Winkelbereichen der Sensormittel das Objekt erfasst wird. Die Vorrichtung ist dabei ausgestaltet, um abhängig von dem Winkelbereich, in welchem das Objekt erfasst wird, die gerichtete Bewegung des Objekts zu der Stelle oder die Rückbewegung des Objekts von der Stelle zu erfassen.

Beispielsweise können die Sensormittel ausgestaltet sein, um zu erfassen, ob sich das Objekt in einem ersten bzw. zweiten bzw. dritten Winkelbereich befindet, welcher im Wesentlichen einen Winkel von 60° bzw. 90° bzw. 120° in einer Ebene parallel zur Fahrbahn zu dem Ort am Fahrzeug ausbildet, an welchem die optischen Sensormittel am Fahrzeug angeordnet sind. (Ein Winkel von 0° bzw. 180° würde parallel zu der Fahrzeugseite verlaufen, an welcher der optische Sensor angeordnet ist.) Dabei gilt eine Bewegung des Objekts in Richtung der optischen Sensormittel nur dann als eine gerichtete Bewegung, welche als eine Voraussetzung zur Betätigung des Schließelements gilt, wenn diese Bewegung nur maximal einen dieser Winkelbereich gekreuzt bzw. schneidet. Anders ausgedrückt gilt eine Bewegung, welche zwei Winkelbereiche schneidet, nicht als die gerichtete Bewegung, welche als Voraussetzung zur Betätigung des Schließelements gilt.

Gemäß einer weiteren erfindungsgemäßen Ausführungsform besitzen die optischen Sensormittel Pixel, welche matrixartig angeordnet sind. Dabei sind die optischen Sensormittel ausgestaltet, um zu erfassen, in welcher von verschiedenen Linien innerhalb des Erfassungsbereiches sich das Objekt befindet. Dazu erfassen die optischen Sensormittel, in welcher von verschiedenen Zeilen der Matrix ein Pixel das Objekt erfasst. Dabei entspricht jede Zeile von Pixeln der Matrix einer Linie im Erfassungsbereich, wobei jede Linie im Wesentlichen in derselben Ebene parallel zur Fahrbahn verläuft, die Linien parallel zueinander verlaufen und keine Linie das Fahrzeug berührt. Die Vorrichtung ist ausgestaltet, um abhängig von der Information, in welchen Linien das Objekt erfasst wird, die gerichtete Bewegung des Objektes zu erfassen.

Da jede Linie quasi ein Maß für einen Abstand des Objekts vom Fahrzeug darstellt, gilt beispielsweise eine Bewegung des Objekts in Richtung der optischen Sensormittel nur dann als eine gerichtete Bewegung, welche als eine Voraussetzung zur Betätigung des Schließelements gilt, wenn das Objekt bei der Bewegung von Pixeln mindestens zweier Zeilen erfasst wird. Dabei muss das Objekt zuerst von einem Pixel einer ersten Zeile und anschließend von einem Pixel einer zweiten Zeile erfasst werden, wobei die erste Zeile mit einer ersten Linie und die zweite Zeile mit einer zweiten Linie korrespondiert und wobei die erste Linie einen größeren Abstand als die zweite Linie von dem Fahrzeug aufweist.

Erfindungsgemäße Ausführungen umfassen jeweils auch eine Vorrichtung, welche zur Durchführung einer der vorab beschriebenen Varianten des erfindungsgemäßen Verfahrens ausgestaltet ist.

Schließlich umfasst die vorliegende Erfindung auch ein Fahrzeug, welches neben einem Schließelement eine erfindungsgemäße Vorrichtung umfasst.

Die vorliegende Erfindung ist zum Betätigen eines Schließelements eines Fahrzeugs geeignet. Selbstverständlich ist die vorliegende Erfindung nicht auf diesen bevorzugten Anwendungsbereich eingeschränkt, da die vorliegende Erfindung auch für Schiffe, Flugzeuge sowie gleisgebundene oder spurgeführte Fahrzeuge eingesetzt werden kann. Darüber hinaus ist es auch denkbar, die vorliegende Erfindung zur Betätigung eines Schließelements eines stationären Objektes (beispielsweise eines Hauses) einzusetzen.

Im Folgenden wird die vorliegende Erfindung anhand bevorzugter erfindungsgemäßer Ausführungsformen mit Bezug zu den Figuren im Detail beschrieben.

In Fig. 1 wird die vorliegende Erfindung anhand der Betätigung einer Heckklappe eines Fahrzeugs dargestellt.

In Fig. 2 ist ein erfindungsgemäßer Erfassungsbereich in Verlängerung der Fahrzeuglängsachse hinter dem Fahrzeug dargestellt.

In Fig. 3 ist ein erfindungsgemäßer Erfassungsbereich in einem Winkel von 45° zur Fahrzeugslängsachse hinter dem Fahrzeug dargestellt.

In Fig. 4 ist ein erfindungsgemäßer Erfassungsbereich in einer Draufsicht dargestellt.

In Fig. 5 sind erfindungsgemäße Winkelbereiche zum Erfassen des Objekts zur Betätigung einer Heckklappe des Fahrzeugs dargestellt.

In Fig. 6 sind erfindungsgemäße Winkelbereiche zum Erfassen des Objekts zur Betätigung einer Tür des Fahrzeugs dargestellt.

In Fig. 7 ist schematisch ein Fahrzeug mit einer erfindungsgemäßen Vorrichtung dargestellt.

In Fig. 8 ist ein Flussplan eines erfindungsgemäßen Verfahrens dargestellt.

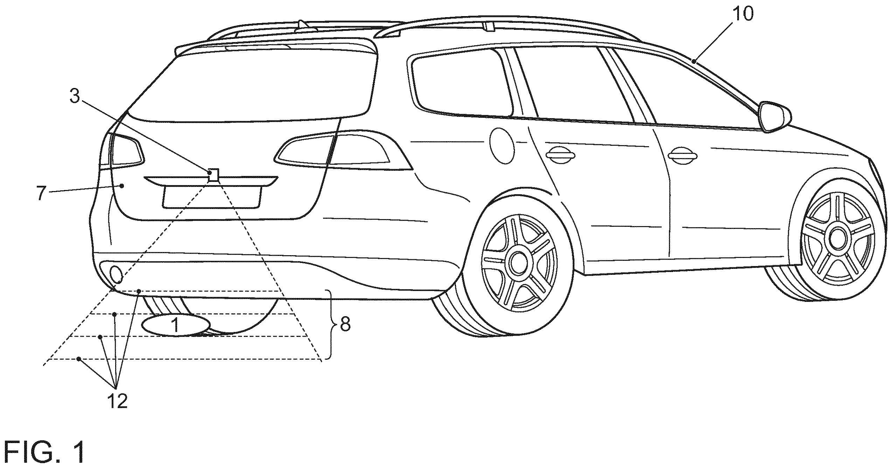

In Fig. 1 ist ein erfindungsgemäßes Fahrzeug 10 mit einer Heckklappe 7 dargestellt. In der Nähe der Kennzeichenleuchte der Heckklappe 7 befindet sich ein optischer Sensor 3. Der optische Sensor 3 erfasst Bewegungen in einem Erfassungsbereich 8 des Sensors 3.

Der optische Sensor 3 umfasst Pixel, welche in Form einer Matrix in Spalten und Zeilen angeordnet sind. Dabei korrespondieren diese Zeilen mit Linien 12 im Erfassungsbereich 8, welche parallel zueinander entlang der Breitenrichtung des Fahrzeugs 10 verlaufen. Wenn sich ein Objekt auf einer dieser Linien 12 befindet, wird dies von den Pixeln derjenigen Zeile der Matrix des optischen Sensors 3, welche mit dieser Linie 12 korrespondiert, erfasst. Dadurch kann ein Abstand des Objekts vom optischen Sensor 3 erfasst werden.

Zur Markierung oder Lokalisierung des Erfassungsbereichs 8 kann eine Art Spot 1 als optische Markierung bei dieser Ausführungsform in der Mitte des Erfassungsbereichs 8 erzeugt werden.

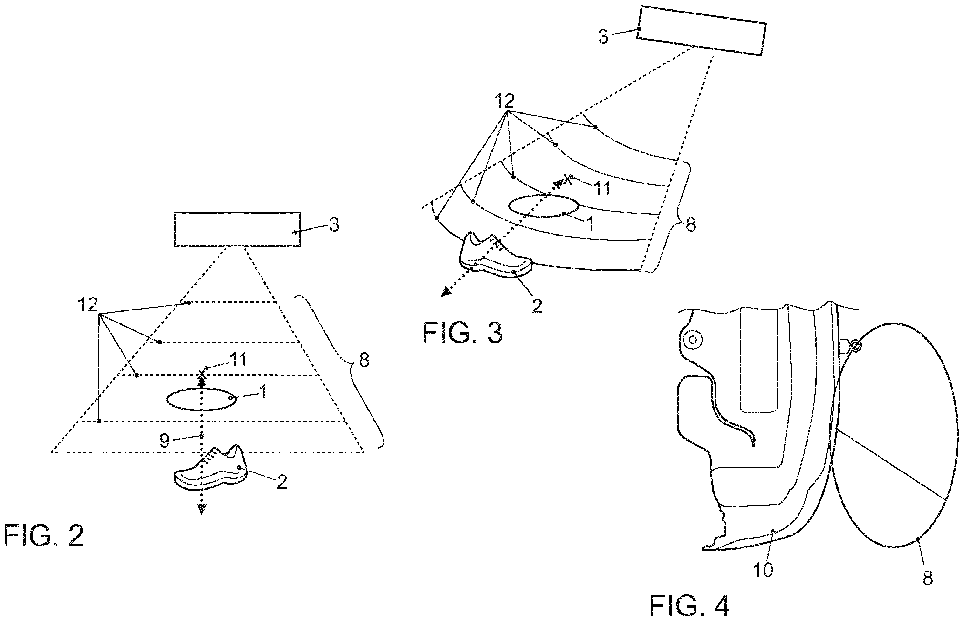

Die in Fig. 1 dargestellte Ausführungsform ist in Fig. 2 nochmals schematisch abgebildet.

Zur Betätigung der Heckklappe 7 bewegt beispielsweise der Fahrer seinen Fuß 2 in Richtung des optischen Sensors 3 zu einer Stelle 11 innerhalb des Erfassungsbereichs 8. Bei dieser gerichteten Hinbewegung 9 überquert der Fuß 2 die drei äußeren Linien 12, was anhand von Pixeln innerhalb der mit den Linien 12 korrespondierenden Zeilen der Matrix des optischen Sensors 3 erfasst wird. Nach einem gewissen Verharren des Fußes 2 an der Stelle 11 muss der Fahrer seinen Fuß 2 in einer Richtung 9 wieder zurückbewegen, wobei diese Richtung der Rückbewegung im Wesentlichen antiparallel zu Richtung der Hinbewegung sein muss und wobei auch die Länge der Rückbewegung im Wesentlichen der Länge der Hinbewegung entsprechen muss, um die Betätigung der Heckklappe 7 zu bewirken. Die Länge der jeweiligen Bewegung kann dabei anhand der Linien 12 erfasst werden, welche von dem Fuß 2 während der jeweiligen Bewegung überquert werden.

In Fig. 3 ist ein Erfassungsbereich 8 des optischen Sensors 3 dargestellt, welcher schräg hinter dem Fahrzeug 10 (in einem Winkel von 45° zur Fahrzeuglängsachse) angeordnet ist. Um in diesem Fall eine Betätigung der Heckklappe 7 durchzuführen, muss der Fuß 2 in ähnlicher Weise wie bei der in Fig. 2 dargestellten Ausführungsform zuerst mit einer Hinbewegung zu dem optischen Sensor 3 auf die Stelle 11 bewegt werden, dort für ein vorbestimmtes Zeitintervall verharren und dann in der umgekehrten Richtung 9 zum Ausgangspunkt zurückbewegt werden.

Anhand von Fig. 3 wird gezeigt, dass die gerichtete Bewegung zur Betätigung der Heckklappe 7 nicht nur in Richtung der Fahrzeuglängsachse verlaufen kann, sondern auch in einem Winkel zu dieser Fahrzeuglängsachse, solange die gerichtete Bewegung auf den optischen Sensor 3 zu gerichtet ist.

In Fig. 4 ist der Erfassungsbereich 8 des optischen Sensors 3 in Form einer Draufsicht hinter dem Fahrzeug 10 dargestellt.

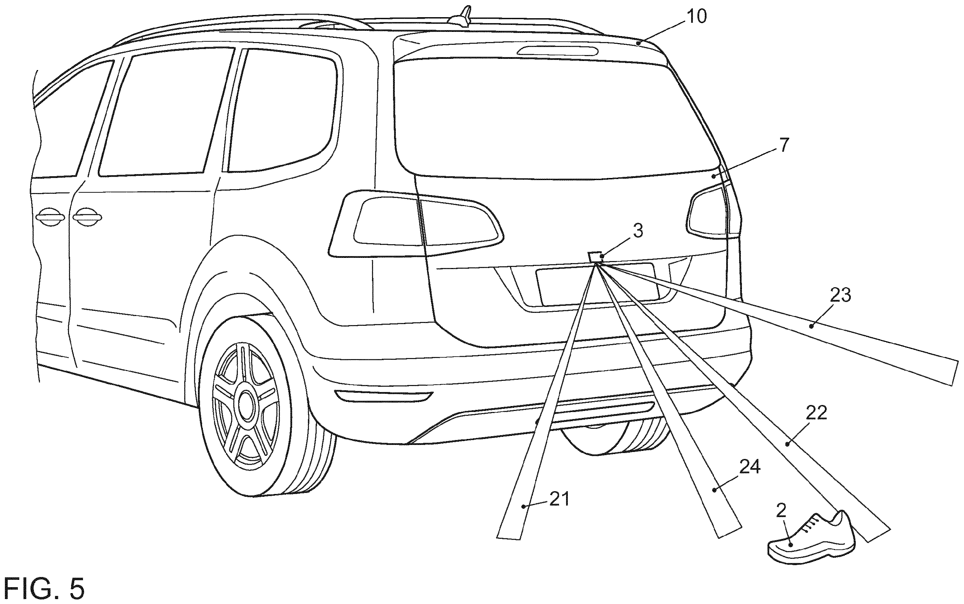

In Fig. 5 ist ein weiteres erfindungsgemäßes Detail zur Betätigung einer Heckklappe 7 eines Fahrzeugs 10 (vergleichbar mit Fig. 1) dargestellt. Wenn der Fuß 2 von einem Pixel einer entsprechenden Spalte der Matrix des optischen Sensors 3 erfasst wird, dann befindet sich der Fuß 2 in einem bestimmten Winkelbereich 21-24, wobei der Scheitelpunkt jedes Winkelbereichs 21-24 der optische Sensor 3 ist. Wenn der Fuß (oder ein Objekt) bei der Bewegung mehrere der ausgezeichneten Winkelbereiche 21-23 kreuzt, handelt es sich um eine an dem Fahrzeug 10 vorbeiführende Bewegung. Anhand der Winkelbereiche 21-23 kann also zwischen einer an dem Fahrzeug vorbeiführenden Bewegung und einer zu dem optischen Sensor 3 hin führenden Bewegung oder einer von dem optischen Sensor 3 weg führenden Bewegung unterschieden werden.

Mit dem Winkelbereich 24 ist in Fig. 5 derjenige Winkelbereich bezeichnet, in welchem der Fuß 2 eine Hinbewegung und eine Rückbewegung ausführt, um erfolgreich die Heckklappe 7 zu betätigen.

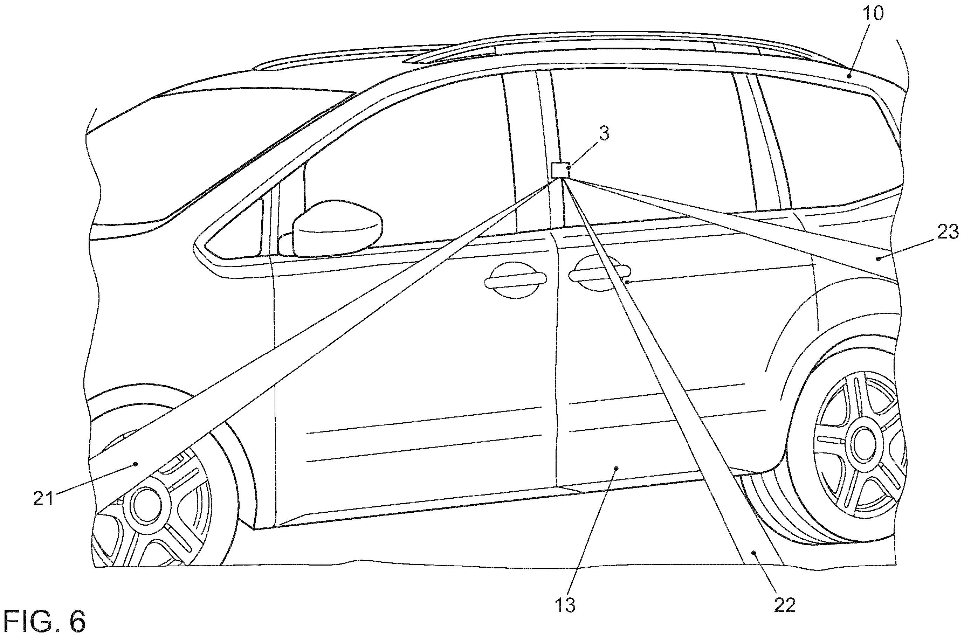

In Fig. 6 ist ein erfindungsgemäßes Fahrzeug mit einer Schiebetür 13 dargestellt. In diesem Fall befindet sich der optische Sensor 3 in der B-Säule des Fahrzeugs 10. Wiederum kann anhand der Winkelbereiche 21-23 zwischen einer am Fahrzeug 10 vorbeiführenden Bewegung und einer Bewegung, welche zu dem optischen Sensor 3 hin gerichtet ist oder von dem optischen Sensor 3 weg gerichtet ist, unterschieden werden.

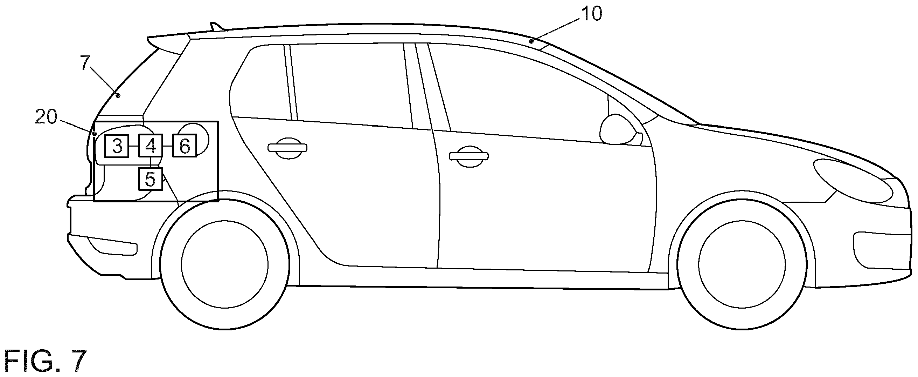

In Fig. 7 ist schematisch ein erfindungsgemäßes Fahrzeug 10 mit einer erfindungsgemäßen Vorrichtung 20 zur Betätigung einer Heckklappe 7 des Fahrzeugs 10 dargestellt.

Die Vorrichtung 20 umfasst ihrerseits eine Steuerung 4, den optischen Sensor 3, eine Funkantenne 5 und einen Laser 6. Während mit der Funkantenne 5 ein für das Fahrzeug 10 berechtigter Funkschlüssel erfasst werden kann, ist der Laser 6 ausgestaltet, um eine optische Markierung zur Lokalisierung der Stelle 11 im Erfassungsbereich 8 des optischen Sensors 3 zu erzeugen.

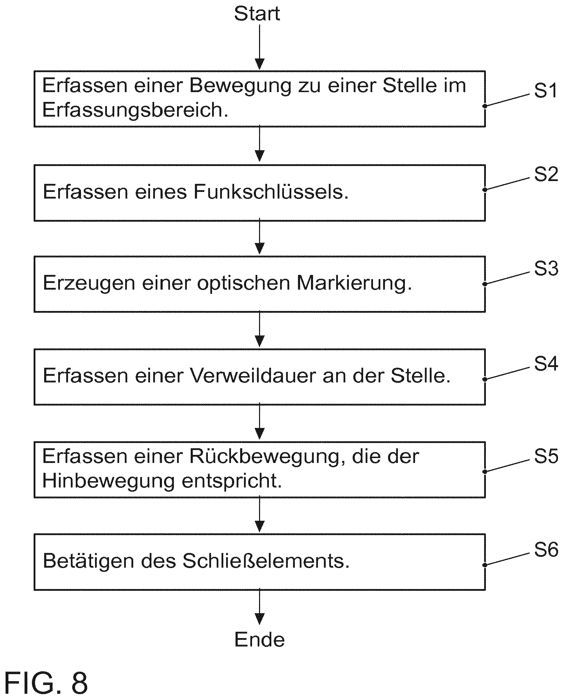

In Fig. 8 ist ein Flussplan eines erfindungsgemäßen Verfahrens zur Betätigung eines Schließelements 7 eines Fahrzeugs 10 dargestellt.

Im ersten Schritt S1 wird die Bewegung eines Objekts 2 zu einer Stelle 11 im Erfassungsbereich 8 des optischen Sensors 3 erfasst. Nur wenn diese zu dem optischen Sensor 3 hin gerichtete Bewegung im ersten Schritt S1 erfasst wird, wird im folgenden Schritt S2 ein für das Fahrzeug berechtigter Funkschlüssel im Bereich des optischen Sensors 3 gesucht.

Nur wenn im Schritt S2 der Funkschlüssel erfasst wurde, wird im folgenden Schritt S3 eine optische Markierung in Form eines mit einer Frequenz von z.B. 1 Hz blinkenden Spots an der Stelle 11 erzeugt. Durch die Erzeugung der optischen Markierung wird also quasi eine Bedienschnittstelle an der Stelle 11 auf den Boden projiziert. Für eine korrekte Hinbewegung muss der Fuß 2 auf die Stelle 11 bzw. in den Spot treten. Dabei wird die Form des Fußes, die Höhe des Fußes sowie die Spitze des Fußes erfasst, um den Fuß (oder Schuh) von anderen Objekten zu unterscheiden, wobei bei anderen Objekten das erfindungsgemäße Verfahren abgebrochen wird, so dass keine Betätigung des Schließelements durchgeführt wird. Zur Unterscheidung eines Fußes bzw. Schuhs von anderen Objekten kann auch die Bewegung der Fußspitze erfasst und die entsprechende dynamische Bildaufnahme, welche mit dem optischen Sensor 3 aufgenommen wurde, ausgewertet werden.

Sobald der Fuß in einer korrekten Bewegung zu der Stelle 11 geführt worden ist, wird die optische Markierung dauerhaft (nicht mehr blinkend) dargestellt. Bei einer nicht korrekten Bewegung des Fußes zu der Stelle 11 oder falls kein Fuß als Objekt erkannt wird, wird mit einer schnell blinkenden Markierung (z.B. 3 Hz) der bevorstehende Abbruch des erfindungsgemäßen Verfahrens signalisiert.

Wenn die Bewegung des Fußes zu der Stelle 11 korrekt erfasst wurde, wird im Schritt S4 das Verweilen der Fußspitze an der Stelle 11 überwacht. Dabei dürfen sich die von dem optischen Sensor erfassten Daten, welche den Fuß repräsentieren, während mindestens einer ersten Zeitspanne (z.B. 0,4 s) und während höchstens einer zweiten Zeitspanne (z.B. 3 s) nicht ändern, wobei die Zeitspanne jeweils zu einem Zeitpunkt beginnt, sobald der Fuß 2 die Stelle erreicht. Der Fuß muss also während eines vorbestimmten Zeitintervalls an der Stelle 11 verweilen. Wenn der Fuß korrekt lang genug an der Stelle 11 verweilt, wird die optische Markierung weiterhin dauerhaft erzeugt und zusätzlich ein weiterer Hinweis erzeugt (z. B. wird das so genannte dritte Bremslicht angesteuert), damit die Bedienperson den Blick vom Boden abwendet.

Wenn auch die Verweildauer des Fußes 2 an der Stelle 11 korrekt erfasst wurde, wird im folgenden Schritt S5 eine Rückbewegung des Fußes 2 mit dem optischen Sensor 3 erfasst. Wenn die Rückbewegung der Hinbewegung des Fußes 2 entspricht (wenn beispielsweise die Bewegungsrichtungen der Hin- und Rückbewegung im Wesentlichen antiparallel sind), wird das entsprechende Schließelement des Fahrzeugs betätigt (z.B. geöffnet, wenn es geschlossen ist oder geschlossen, wenn es geöffnet ist), wie es in Schritt S6 beschrieben ist.

### Bezugszeichenliste

- 1: optische Markierung
- 2: Fuß bzw. Schuh
- 3: optischer Sensor
- 4: Steuerung
- 5: Funkantenne
- 6: Laser
- 7: Heckklappe
- 8: Erfassungsbereich
- 9: Richtung der Hinbewegung bzw. Rückbewegung
- 10: Fahrzeug
- 11: Stelle
- 12: Linie
- 13: Schiebetür
- 20: Vorrichtung
- 21-24: Winkelbereich
- S1-S6: Verfahrensschritt

## Patentansprüche

1. Verfahren zum Betätigen eines Schließelements (7, 13) eines Fahrzeugs (10), folgende Schritte umfassend:
optisches Erfassen einer gerichteten Bewegung (9) eines Objekts (2) zu einer beliebigen Stelle (11) in einem Bereich (8),
Erzeugen einer optischen Markierung (1) zur Lokalisierung der Stelle (8), wenn vorab die gerichtete Bewegung (9) erfasst wurde,
Erfassen eines Bewegungsablaufs des Objekts (2), wobei der Bewegungsablauf die gerichtete Bewegung (9) umfasst, und
Betätigen des Schließelements (7, 13), wenn der erfasste Bewegungsablauf mindestens einer vorgegebenen Bedingung genügt.

2. Verfahren nach Anspruch 1,
**dadurch gekennzeichnet,**
**dass** das Erzeugen der optischen Markierung (1) ein Suchen nach einem für das Fahrzeug (10) berechtigten Schlüssel umfasst, und
**dass** die optische Markierung nur erzeugt wird, wenn vorher ein der Schlüssel erfasst wurde.

3. Verfahren nach Anspruch 1 oder 2,
**dadurch gekennzeichnet,**
**dass** überprüft wird, ob das Objekt (2) die Stelle erreicht, und
**dass** eine Eigenschaft der optischen Markierung geändert wird, wenn das Objekt die Stelle (11) erreicht.

4. Verfahren nach einem der vorhergehenden Ansprüche,
**dadurch gekennzeichnet,**
**dass** der Bereich (8) mindestens einen vorbestimmten Abstand von dem Fahrzeug (10) aufweist.

5. Verfahren nach einem der vorhergehenden Ansprüche,,
**dadurch gekennzeichnet,**
**dass** das Verfahren umfasst:
Erkennen, ob das Objekt ein menschlicher Fuß (2) ist, anhand seiner Fußspitze, eines Übergangs des Fußes in ein Schienenbein und einer Größe des Fußes,
wobei das Schließelement nur betätigt wird, wenn erkannt wird, dass das Objekt ein menschlicher Fuß ist.

6. Verfahren nach einem der vorhergehenden Ansprüche,
**dadurch gekennzeichnet,**
**dass** die mindestens eine vorgegebene Bedingung eine Bedingung umfasst, wonach der Bewegungsablauf eine Rückbewegung (9) des Objekts (2) umfasst und wonach die Richtung der Rückbewegung (9) der Richtung der gerichteten Bewegung (9) entgegengerichtet ist.

7. Verfahren nach Anspruch 6,
**dadurch gekennzeichnet,**
**dass** die mindestens eine vorgegebene Bedingung eine Bedingung umfasst, wonach das Objekt (2) für ein vorbestimmtes Zeitintervall an der Stelle (11) verweilt.

8. Verfahren nach einem der vorhergehenden Ansprüche,
**dadurch gekennzeichnet,**
**dass** die gerichtete Bewegung (9) auf optische Sensormittel (3) zu gerichtet ist, wobei die optischen Sensormittel (3) zu dem Erfassen der gerichteten Bewegung (9) des Objekts (2) und des Bewegungsablaufs des Objekts (2) ausgestaltet sind.

9. Verfahren nach einem der vorhergehenden Ansprüche,
**dadurch gekennzeichnet,**
**dass** die optische Markierung (1) an der Stelle (11) erzeugt wird, oder
**dass** die optische Markierung in einem Abstand von der Stelle (11) erzeugt wird, wobei die optische Markierung eine Richtungsangabe umfasst, durch welche die Stelle (11) ausgehend von der optischen Markierung (1) lokalisierbar ist.

10. Verfahren nach einem der vorhergehenden Ansprüche,
**dadurch gekennzeichnet,**
**dass**, wenn nach dem Erzeugen der optischen Markierung erfasst wird, dass der erfasste Bewegungsablauf nicht der mindestens einen vorgegebenen Bedingung genügt, eine Eigenschaft der optischen Markierung geändert wird, um einen Benutzer darüber zu informieren.

11. Vorrichtung zum Betätigen eines Schließelements (7, 13) eines Fahrzeugs (10),
wobei die Vorrichtung (20) eine Steuerung (4), optische Sensormittel (3) und eine Lichtquelle (6) umfasst,
wobei die optischen Sensormittel (3) ausgestaltet sind, um eine gerichtete Bewegung (9) eines Objekts (2) zu einer beliebigen Stelle (11) in einem Bereich (8) zu erfassen,
wobei die Lichtquelle (6) und die Steuerung (4) ausgestaltet sind, um eine optische Markierung (1) zur Lokalisierung des Bereichs (8) zu erzeugen, wenn die Steuerung (4) vorab die gerichtete Bewegung (9) mittels der optischen Sensormittel (3) erfasst hat, wobei die optischen Sensormittel (3) ausgestaltet sind, um einen Bewegungsablauf des Objekts (2) zu erfassen, wobei der Bewegungsablauf die gerichtete Bewegung (9) umfasst,
wobei die Vorrichtung (20) ausgestaltet ist, um das Schließelement (7, 13) zu betätigen, wenn die Steuerung (4) entschieden hat, dass der erfasste Bewegungsablauf mindestens einer vorgegebenen Bedingung genügt.

12. Vorrichtung nach Anspruch 11,
**dadurch gekennzeichnet,**
**dass** die optischen Sensormittel (3) ausgestaltet sind, um zu bestimmen, in welchem von verschiedenen Winkelbereichen (21-23) der Sensormittel (3) das Objekt erfasst wird, und dass die Vorrichtung (20) ausgestaltet ist, um abhängig von dem Winkelbereich (21-23), in welchem das Objekt erfasst wird, die gerichtete Bewegung (9) des Objektes (2) zu erfassen.

13. Vorrichtung nach Anspruch 11 oder 12,
**dadurch gekennzeichnet,**
**dass** die optischen Sensormittel (3) Pixel umfassen, welche in Form einer Matrix angeordnet sind,
**dass** die optischen Sensormittel (3) ausgestaltet sind, um zu bestimmen, in welcher von verschiedenen Linien (12) in dem Bereich (8) das Objekt (2) erfasst wird, indem die optischen Sensormittel erfassen, in welcher von verschiedenen Zeilen der Matrix ein Pixel das Objekt (2) erfasst, wobei jede Zeile mit einer Linie (12) korrespondiert, und dass die Vorrichtung (20) ausgestaltet ist, um abhängig von den Linien (12), in welchen das Objekt (2) erfasst wird, die gerichtete Bewegung (9) des Objektes (2) zu erfassen.

## Claims

1. Method for the actuation of a closing element (7, 13) of a vehicle (10), comprising the following steps:
optical detection of a directed displacement (9) of an object (2) to an arbitrary position (11) in a region (8),
producing a visual marking (1) for localizing the position (8) if the directed displacement (9) has previously been detected,
detection of a displacement process of the object (2), wherein the displacement process comprises the directed displacement (9), and
actuation of the closing element (7, 13) if the detected displacement process meets at least one predetermined condition.

2. Method according to Claim 1, **characterized in that** the generation of the visual marking (1) comprises a search for a key that is authorized for the vehicle (10), and
the visual marking is only produced if a key has been previously detected.

3. Method according to Claim 1 or 2, **characterized in that**
a check is made as to whether the object (2) reaches the position, and
a property of the visual marking is changed if the object reaches the position (11).

4. Method according to any one of the preceding claims,
**characterized in that**
the region (8) is at least at a predetermined distance from the vehicle (10).

5. Method according to any one of the preceding claims,
**characterized in that**
the method comprises:
detecting whether the object is a human foot (2) using the toe thereof, a transition of the foot into a lower leg and a size of the foot,
wherein the closing element is only actuated if it is detected that the object is a human foot.

6. Method according to any one of the preceding claims,
**characterized in that**
the at least one predetermined condition comprises a condition according to which the displacement process comprises a reverse movement (9) of the object (2) and according to which the direction of the reverse movement (9) is opposite to the direction of the directed displacement (9).

7. Method according to Claim 6, **characterized in that**
the at least one predetermined condition comprises a condition, according to which the object (2) dwells for a predetermined time interval at the position (11) .

8. Method according to any one of the preceding claims,
**characterized in that**
the directed displacement (9) is to be directed towards the optical sensor means (3), wherein the optical sensor means (3) are configured for the detection of the directed displacement (9) of the object (2) and of the displacement process of the object (2).

9. Method according to any one of the preceding claims,
**characterized in that**
the visual marking (1) is produced at the position (11) or
the visual marking is produced at a distance from the position (11), wherein the visual marking comprises directional information, using which the position (11) can be localized starting from the visual marking (1).

10. Method according to any one of the preceding claims,
**characterized in that**
if, following the generation of the visual marking, it is detected that the detected displacement process does not meet the at least one predetermined condition, a property of the visual marking is changed in order to inform a user regarding the failure to meet the at least one predetermined condition.

11. Device for the actuation of a closing element (7, 13) of a vehicle (10), wherein the device (20) comprises a controller (4), optical sensor means (3) and a light source (6),
wherein the optical sensor means (3) are configured to detect a directed displacement (9) of an object (2) to an arbitrary position (11) in a region (8), wherein the light source (6) and the controller (4) are configured to produce a visual marking (1) for localizing the region (8) if the controller (4) has previously detected the directed displacement (9) by means of the optical sensor means (3), wherein the optical sensor means (3) are configured to detect a displacement process of the object (2), wherein the displacement process comprises the directed displacement (9),
wherein the device (20) is configured to actuate the closing element (7, 13) if the controller (4) has decided that the detected displacement process meets at least one predetermined condition.

12. Device according to Claim 11, **characterized in that** the optical sensor means (3) are configured to determine in which of various angular regions (21-23) of the sensor means (3) the object is detected, and that the device (20) is configured to detect the directed displacement (9) of the object (2) depending on the angular region (21-23) in which the object is detected.

13. Device according to Claim 11 or 12, **characterized in that**
the optical sensor means (3) comprise pixels that are disposed in the form of a matrix,
the optical sensor means (3) are configured to determine in which of various lines (12) in the region (8) the object (2) is detected by the optical sensor means detecting in which of various lines of the matrix a pixel detects the object (2), wherein each row corresponds to a line (12), and
the device (20) is configured to detect the directed displacement (9) of the object (2) depending on the lines (12) in which the object (2) is detected.

## Revendications

1. Procédé pour actionner un élément de fermeture (7, 13) d'un véhicule (10), comprenant les étapes suivantes:
- détecter optiquement un mouvement orienté (9) d'un objet (2) vers un endroit quelconque (11) dans une zone (8),
- produire un marquage optique (1) pour la localisation de l'endroit (8), lorsque le mouvement orienté (9) a été détecté au préalable,
- détecter un déroulement du mouvement de l'objet (2), dans lequel le déroulement du mouvement comprend le mouvement orienté (9), et
- actionner l'élément de fermeture (7, 13), lorsque le déroulement du mouvement détecté satisfait au moins une condition prédéterminée.

2. Procédé selon la revendication 1, **caractérisé en ce que** la production du marquage optique (1) comprend une recherche d'une clé autorisée pour le véhicule (10), et **en ce que** l'on ne produit le marquage optique que lorsqu'une des clés a été détectée.

3. Procédé selon la revendication 1 ou 2, **caractérisé en ce que** l'on vérifie si l'objet (2) atteint l'endroit, et **en ce que** l'on change une propriété du marquage optique, lorsque l'objet atteint l'endroit (11) .

4. Procédé selon l'une quelconque des revendications précédentes, **caractérisé en ce que** la zone (8) présente au moins une distance prédéterminée du véhicule (10).

5. Procédé selon l'une quelconque des revendications précédentes, **caractérisé en ce que** le procédé comprend l'étape suivante:
- reconnaître si l'objet est un pied humain (2), à l'aide de sa pointe de pied, d'une transition du pied à un tibia et d'une grandeur du pied, dans lequel on n'actionne l'élément de fermeture que lorsque l'on reconnaît que l'objet est un pied humain.

6. Procédé selon l'une quelconque des revendications précédentes, **caractérisé en ce que** ladite au moins une condition prédéterminée comprend une condition, selon laquelle le déroulement du mouvement comprend un mouvement de recul (9) de l'objet (2) et selon laquelle la direction du mouvement de recul (9) est opposée à la direction du mouvement orienté (9).

7. Procédé selon la revendication 6, **caractérisé en ce que** ladite au moins une condition prédéterminée comprend une condition, selon laquelle l'objet (2) reste à l'endroit (11) pendant un intervalle de temps prédéterminé.

8. Procédé selon l'une quelconque des revendications précédentes, **caractérisé en ce que** le mouvement orienté (9) est dirigé vers des moyens de détecteur optique (3), dans lequel les moyens de détecteur optique (3) sont configurés pour la détection du mouvement orienté (9) de l'objet (2) et du déroulement du mouvement de l'objet (2).

9. Procédé selon l'une quelconque des revendications précédentes, **caractérisé en ce que** l'on produit le marquage optique (1) à l'endroit (11), ou **en ce que** l'on produit le marquage optique à une distance de l'endroit (11), dans lequel le marquage optique comprend une indication de direction, par laquelle l'endroit (11) peut être localisé à partir du marquage optique (1).

10. Procédé selon l'une quelconque des revendications précédentes, **caractérisé en ce que** lorsque l'on détecte, après la production du marquage optique, que le déroulement du mouvement détecté ne satisfait pas ladite au moins une condition prédéterminée, on change une propriété du marquage optique, afin d'en informer un utilisateur.

11. Dispositif pour actionner un élément de fermeture (7, 13) d'un véhicule (10), dans lequel le dispositif (20) comprend une commande (4), des moyens de détecteur optique (3) et une source de lumière (6),
- dans lequel les moyens de détecteur optique (3) sont configurés pour détecter un mouvement orienté (9) d'un objet (2) vers un endroit quelconque (11) dans une zone (8),
- dans lequel la source de lumière (6) et la commande (4) sont configurées pour produire un marquage optique (1) pour la localisation de la zone (8), lorsque la commande (4) a détecté au préalable le mouvement orienté (9) au moyen des moyens de détecteur optique (3),
- dans lequel les moyens de détecteur optique (3) sont configurés pour détecter un déroulement du mouvement de l'objet (2), dans lequel le déroulement du mouvement comprend le mouvement orienté (9),
- dans lequel le dispositif (20) est configuré pour actionner l'élément de fermeture (7, 13) lorsque la commande (4) a décidé que le déroulement du mouvement détecté satisfait au moins une condition prédéterminée.

12. Dispositif selon la revendication 11, **caractérisé en ce que** les moyens de détecteur optique (3) sont configurés pour déterminer dans laquelle de différentes zones angulaires (21 - 23) des moyens de détecteur (3) l'objet est détecté, et **en ce que** le dispositif (20) est configuré pour détecter, en fonction de la zone angulaire (21 - 23) dans laquelle l'objet est détecté, le mouvement orienté (9) de l'objet (2).

13. Dispositif selon la revendication 11 ou 12, **caractérisé en ce que**
- les moyens de détecteur optique (3) comprennent des pixels, qui sont disposés sous la forme d'une matrice,
- les moyens de détecteur optique (3) sont configurés pour déterminer dans laquelle de différentes lignes (12) dans la zone (8) l'objet (2) est détecté, par le fait que les moyens de détecteur optique détectent dans laquelle de différentes rangées de la matrice un pixel détecte l'objet (2), dans lequel chaque rangée correspond à une ligne (12), et
- le dispositif (20) est configuré pour détecter, en fonction des lignes (12) dans lesquelles l'objet (2) est détecté, le mouvement orienté (9) de l'objet (2).
